(19)

**Europäisches Patentamt**
**European Patent Office**
**Office européen des brevets**

(11) **EP 4 681 578 A1**

(12) **EUROPEAN PATENT APPLICATION**

(43) Date of publication:
**21.01.2026 Bulletin 2026/04**

(21) Application number: **25189496.0**

(22) Date of filing: **15.07.2025**

(51) International Patent Classification (IPC):
*A47B 47/00* (2006.01)    *A47B 87/00* (2006.01)
*A47B 87/02* (2006.01)    *A47C 1/124* (2006.01)
*A47C 4/02* (2006.01)    *A47C 11/00* (2006.01)
*A47C 13/00* (2006.01)

(52) Cooperative Patent Classification (CPC):
**A47B 47/0091; A47B 87/007; A47B 87/0207;**
**A47C 1/124; A47C 4/02; A47C 11/00; A47C 13/005**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **19.07.2024 CZ 20240290**

(71) Applicant: **VULCANUS design s.r.o.**
**779 00 Olomouc, Lazce (CZ)**

(72) Inventor: **Kovar, Ondrej**
**779 00 Olomouc, Lazce (CZ)**

(74) Representative: **Musil, Dobroslav**
**Dobroslav Musil a partneri s.r.o.**
**Zabrdovicka 11**
**615 00 Brno (CZ)**

(54) **MODULAR SYSTEM**

(57) The invention relates to a modular system, in particular for creating outdoor seating furniture, urban furniture, flower pots, raised beds, outdoor storage systems, retaining walls, fences, garden and park landscaping elements, which comprises at least one three-dimensional module consisting of three mutually perpendicular peripheral surfaces which are formed by a base (1), a side peripheral surface (2) and an upper peripheral surface (3), wherein the upper peripheral surface (3) and the base (1) are connected to each other by an inclined peripheral surface (4), which forms an acute angle ($\alpha$) with the base. The three-dimensional modules of the modular system have the same dimensions and are detachably connected to each other, the side peripheral surface (2) and the adjacent upper peripheral surface (3) of the three-dimensional module being square, wherein the width of all peripheral surfaces (2, 3, 4) and the base (1) is the same and the angle ($\alpha$) formed by the inclined peripheral surface (4) and the base (1) ranges from 45 to 82°.

**Fig. 1**

## Description

## Technical field

The invention relates to a modular system, in particular a system for creating outdoor seating furniture, urban furniture, flower pots, raised beds, outdoor storage systems, retaining walls, fences, garden and park landscaping elements which comprises at least one three-dimensional module consisting of three mutually perpendicular peripheral surfaces which are formed by a base, a side peripheral surface and an upper peripheral surface, the upper peripheral surface and the base being connected by an inclined wall.

## Background art

The well-known modular systems are usually used to build decorative retaining wall systems or columns.

For example, WO0047825 discloses a system of retaining walls and relates to retaining wall blocks and retaining walls built with these blocks. In particular, the invention relates to a retaining wall block system that allows the construction of walls having a random natural appearance with varying block face sizes to create the appearance of a natural stone wall. The blocks are made from cast concrete and have a trapezoidal shape and varying sizes to achieve different wall lengths by assembling them. Some of the blocks have 90 degree angles. The blocks are of equal thickness and have a visible front face or front and back faces. The upper and lower surfaces of the blocks are designed to be stacked one upon the other in rows within the construction of the respective wall. The blocks do not allow mutual assembly in different positions of the blocks. They can only be used to build walls. They cannot be assembled in any other way, nor can they be disassembled and reused to create other products.

US 5848511 describes a system of ornamental walls which are formed by stacking layers of interlocking blocks. More particularly, this invention relates to cast blocks which, when assembled into layers of blocks, interlock to form an ornamental wall. Generally, these low-rise walls are no more than a few meters high and are not relied upon to hold the earth fill from moving. Rather, such walls define ornamental cladding to a low elevation level of the ground or form a low free standing wall, for example along a driveway or an ornamental wall in a lawn landscape. These walls consist of cast cementitious blocks for the construction of a low-rise interconnected wall consisting of a plurality of said blocks, the wall having a first course of said blocks placed side by side and a second course of said blocks stacked in side-by-side relation on the first course and offset relative the first course. Some of the blocks have 90-degree angles. The blocks are of equal thickness and have a visible front face, or front and back faces. The upper and lower surfaces of the blocks are intended to be stacked one upon the other within the construction of the respective wall. The blocks do not allow mutual assembly in different positions of the blocks, block rotation or separate placement in the landscape. They can only be used to build walls. They cannot be assembled in any other way, nor can they be disassembled and reused to create other products. The blocks do not allow mutual assembly in different positions of the blocks.

US 2006117697 A1 describes modules of different shapes made from poured concrete, which are trapezoidal and have one right angle, the upper and lower surfaces are designed to be stacked one upon the other and the modules are connected by rods. The lower and upper surfaces must be inside the wall, so at least three side surfaces of the module are not visible. The modular block system is intended for the construction of retaining walls. Only walls can be built from them. They cannot be assembled in any other way, nor can they be disassembled and reused to create other products.

WO 03006749 A2 discloses modules made from poured concrete of various shapes, mostly trapezoidal, but also with one right angle, the front and rear peripheral surfaces can be visible, the modules are placed next to each other by the side surfaces and are connected to each other in various ways. The modules are intended to create retaining wall systems, also including curved walls. The lower and upper surfaces are parallel and must be inside the wall, so the position of the module cannot be changed and at least three surfaces are not visible. Only walls can be built from said modules. They cannot be assembled in any other way, nor can they be disassembled and reused to create other products.

US 2002028114 A1 discloses a module made from poured concrete which is intended only for retaining walls, has a trapezoidal shape, where the wider peripheral surface is visible, none of the peripheral surfaces is square and only allows stacking the modules one upon the other in rows, wherein from the bottom protrude fixing protrusions which fit into the holes in the top during masonry. In no case can the position of the module be changed and at least two surfaces are not visible. Only walls can be built from them. They cannot be assembled in any other way, nor can they be disassembled and reused to create other products.

WO2015066437 describes an architectural structure with a curved surface which consists of a plurality of boxes which are hollow and are used to create architectural structures curved in different directions. At least one surface is curved. They cannot be used alone, nor can they be disassembled to create new products.

US2012233952A1 describes a system of wall blocks for the construction of walls, the blocks are stacked one upon the other and interconnected by means of openings, the shape of the blocks varies but the upper and lower surfaces are parallel. Only walls can be built from them. They cannot be assembled in any other way or disassembled and reused to create other products.

None of the blocks/modules of the above documents, which represent the known background art, can be used alone, and in the products in which they are used, they are always connected one upon the other in rows, wherein the lower surface of the upper row block lies on the upper surface of the lower row block. Once joined together to form the final products/walls, they cannot be disassembled to form new products without additional modification. If the blocks contain a cavity between the peripheral surfaces, this cavity is intended to be filled with concrete to reinforce the wall or to insert various reinforcing elements.

To create outdoor seating furniture, urban furniture, flower pots, raised beds, outdoor storage systems, retaining walls, fences, garden and park landscaping elements, individual products are currently used, which have a common style or shape, but the variability of using elements of the same shape for different purposes is not possible, such as disassembling a garden bench for seating and creating a raised bed or flower pots from it, and after some disassembling them again and creating an outdoor storage system from them, or reusing them to create a retaining wall.

The object of the invention is to eliminate this disadvantage and provide a modular system comprising three-dimensional modules that would enable such mutual combinations and allow the formation of the above-mentioned products and at the same time allow the formation of various combinations of outdoor seating furniture, urban furniture, flower pots, raised beds, outdoor structures with retaining walls provided with storage systems, combinations of fences, landscaping elements from one three-dimensional module of the same shape and size, where only the position of the three-dimensional modules changes during installation, wherein the created systems can be disassembled, which represents another significant advantage over the background art, since already created products can be disassembled and new products can be created.

## Summary of the invention

The object of the invention is achieved by a modular system which comprises at least one three-dimensional module, wherein the principle of the invention consists in that the three-dimensional modules of the modular system have the same dimensions and are detachably connected to each other, wherein the side peripheral surface and the adjacent upper peripheral surface of the three-dimensional module are square, the width of all peripheral surfaces and the base being the same and the angle $\alpha$ formed between the inclined peripheral surface and the base ranging from 45 to 82°.

In a preferred embodiment, the acute angle $\alpha$ lies in the range of 67 to 77°. In a specific embodiment, the acute angle $\alpha$ is equal to 72°. The shape of the modules allows for a wide range of final assemblies of various shapes and dimensions that perform various functions, for example, assembling to form into outdoor seating furniture, urban furniture, flower pots, raised beds, outdoor storage systems, retaining walls, fences, garden and park landscaping elements.

The principle of the modular system according to the invention also consists in that the length of the side of the square forming the side peripheral surface and the upper peripheral surface is 398 mm. This size represents an optimization of the module dimensions and simplifies the work when assembling the modules into various combinations within the modular system. In addition, when used for seating furniture, in combination with an additional seat, it ensures an optimal ergonomic height of the furniture in the range of 400 to 460 mm.

In the basic embodiment, the modules are formed by only four peripheral surfaces, which can be made from boards, which can be made of wood, steel, plastic or concrete, for example.

If the peripheral surfaces are made of sheet steel, it is advantageous to bend the edges of the peripheral surfaces inwards to strengthen the module, another advantage is to create smooth edges on the peripheral surface edges.

For some types of use of the modules, for example as flower pots, it is advantageous to close one of the openings between the peripheral surfaces with an auxiliary wall or a plug.

The peripheral surfaces are provided with openings for screws or rivets to ensure a firm mutual connection,

For some types of use, it is advantageous if the modules are made up of a solid body.

## Brief description of drawings

The modular system according to the invention will be further described and explained with reference to enclosed drawings, wherein Fig. 1 shows a view of the module in front and side view with marked dimensions, Fig. 2 shows an open module formed by a shell made of boards, Fig. 3 shows an open module formed by a shell of concrete, Fig. 4 shows open module formed by a double-skinned shell of sheet metal, Fig. 5 shows an open module made of thick-walled sheet metal, Fig. 6 depicts an open module made of sheet metal with one internal bend, Fig. 7 shows an open sheet metal module with two internal bends, Fig. 8 shows a module formed by a solid body, Fig. 9 shows a semi-open module with a back surface, Fig. 10 represents an exemplary embodiment of direct connection of two modules, Fig. 11 shows an exemplary embodiment of bent connection of two modules, Figs. 12a to 12c show exemplary embodiments of a chair on one module, Figs. 13a to 13d show exemplary embodiments of benches on two or four modules, Figs. 14 a, 14b show exemplary embodiments of storage systems, Figs. 15a, 15b show exemplary embodiments of flower pots, Fig. 16 shows an exemplary embodiment of a wall or landscaping element with a storage system and Fig. 17 shows an exemplary embodiment of a retaining wall.

## Examples of embodiment

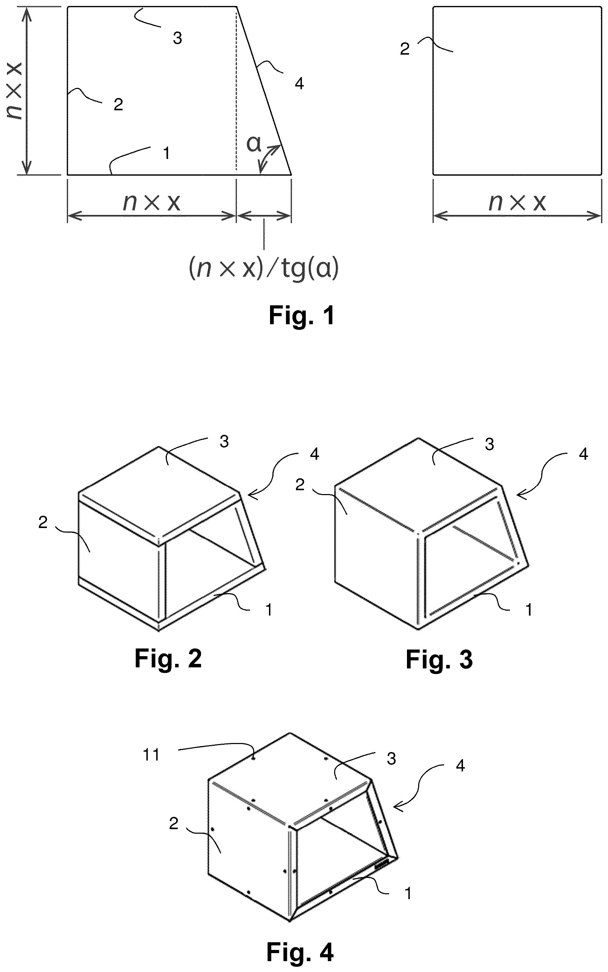

The modular system according to the invention comprises a plurality of comprises a number of mutually assemble able three-dimensional modules comprising four interconnecting peripheral surfaces, of which the longest peripheral surface forms the base **1** of the module, to which on one side is perpendicularly connected a side peripheral surface **2,** to which is again perpendicularly connected an upper peripheral surface **3,** whereby the length of the side peripheral surface **2** and the upper peripheral surface **3** is the same in the basic embodiment of the module, so that each of the two peripheral surfaces **2, 3** forms a square. The base **1** is connected to the upper peripheral surface **3** by an inclined peripheral surface **4.** As shown in Fig. 1, the length/height and width of the side peripheral surfaces **2** are n-times the value **x,** which is in this case 398 mm, as are the length and the width of the upper peripheral surfaces **3**. The width of the base **1** and the width of the inclined peripheral surface **4** is the same as the width of the side peripheral surface **2** and the width of the upper peripheral surface **3**. The length of the base **1** is greater than the length of the upper peripheral surface **3** by the value

$$n*x \ //tg\alpha$$

The acute angle $\alpha$, formed between the inclined peripheral surface **4** and the base **1,** is in the range of 45 to 82°. In a preferred embodiment, the angle $\alpha$ is in the range of 67 to 77°, preferably 70 to 74°. For the basic embodiment, the angle $\alpha$ of 72° was chosen.

In order to optimize the dimensions, the applicant has chosen a side length of x = 398 mm. The reason for this is that modules with this side length, even though they all have the same dimensions, can be used in various combinations, especially in sets of seating furniture, urban furniture, flower pots, raised beds, storage systems, retaining walls, fences and park or landscaping elements. If the 398 mm side length is applied to any seating furniture, in combination with an additional seat, it ensures an optimum seating height in the range of 400 - 460 mm.

From a production-economic point of view, the side length of 398 mm is also very important, because if the modules are made of sheet metal, this dimension is optimized for maximum use of the area of the input sheet metal, which is supplied in sheets of 1500 x 3000 mm.

Another significant advantage of this module size, i.e., the length of its side of 398 mm, is the fact that six modules can fit on a regular pallet measuring 1200 x 800 mm in a plan view, in several layers on top of each other. This represents optimal use of the pallet both in terms of storage economy and transport, as the pallet area is fully utilized.

Regarding the above dimensions, it should be noted that the coefficient n is equal to 1.

It is obvious to a person skilled in the art that the coefficient may be chosen from a set of numbers (0.5; 1; 2; 3; 4; ...) and need not necessarily be the same for all sides of a module, although this solution is not directly protected by the patent claims and from the applicant's point of view number 1 is preferred, as mentioned above, since decreasing or increasing this coefficient only makes sense in individual cases where it is economically beneficial for a specific embodiment of a modular system to change one of the side dimensions in order to achieve savings in the implementation of a specific large-scale work. Otherwise, the modular system is based on the versatility of the individual modules, their interchangeability, replaceability and the possibility of combining them into very different shape combinations that can serve different purposes.

The dimension that will be the same for all peripheral surfaces is their width.

In the basic embodiment, the module comprises only four peripheral surfaces, i.e., a base **1,** a side peripheral surface **2,** an upper peripheral surface **3** and an inclined peripheral surface **4** and is hollow.

In the surfaces of each module, openings **11** are formed for interconnection. The openings **11** are used to insert known connecting elements, such as screws or rivets, which can be used to securely connect the modules into larger units. The openings are not shown on some illustrated embodiments of the modules. For non-detachable connections, the modules can be connected by gluing using a suitable means. In the case of a detachable module connection, the modules can be freely rearranged according to the user's needs. If the user wishes to use the module cavity to grow plants, a plug can be inserted on one side of the cavity or an auxiliary back surface **5** can be attached, turned upwards through the opening to create a flower pot or raised bed, and the modules can be stacked one upon the other to achieve an optimum height and/or side by side to create an optimum shape.

The shape of the module allows any shape to be linked and connected to other modules on all six sides. Perpendicular assemblies can be formed by connecting the perpendicular peripheral surfaces of the modules. By connecting the inclined peripheral surface of one module to the inclined peripheral surface of another module, both perpendicular assemblies and inclined assemblies can be formed, forming the shape of a part of a circle, or even the shape of a closed circle.

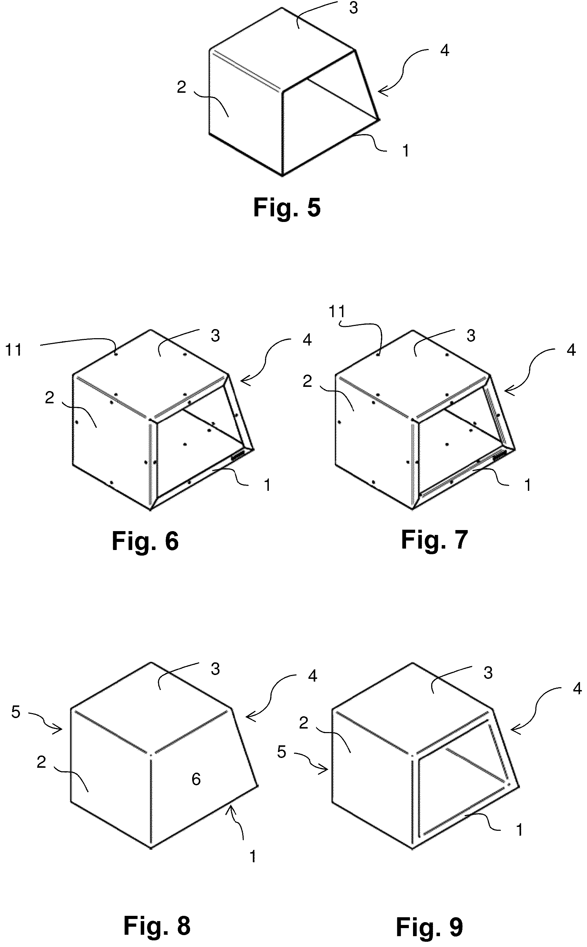

If a module with closed openings on both sides is required, both sides of the cavity can be closed by an auxiliary back surface **5,** see semi-open module in Figure 9, or the module can be made as a solid body, for example from concrete, wood or other suitable material, for example recycled rubber, as shown in Figure 8. In addition to the peripheral surfaces, the solid body module consists of an auxiliary back surface **5** and an auxiliary front surface **6.**

Another possible option is open modules, which may be formed, for example, by a shell made of wooden boards, as shown in Fig. 2, a shell formed, for example, by a casting or moulding of plastic, concrete or other suitable material, as shown in Fig. 3, or a double shell of sheet metal, as shown in Fig. 4.

Also, an open module can be made of thick-walled steel sheet, as shown in Fig. 5.

Modules can also be made thin-walled from sheet metal, as shown in Fig. 6 and 7. To achieve the necessary strength, the edges of all peripheral surfaces are bent inwards, either by a single bend, as shown in Fig. 6, or by a double bend, as shown in Fig. 7.

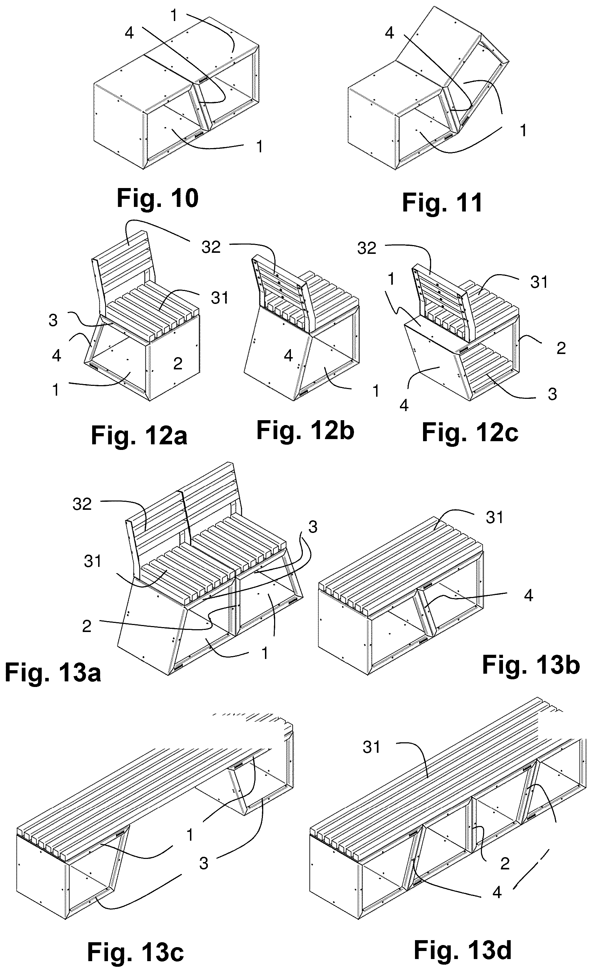

Numerous specific products can be formed from the modules of the modular system according to the invention by combining individual modules. Some of the possible combinations of the modules of the modular system will be described in the following exemplary embodiments, shown in Figs. 10 to 17, which, however, represent only the applicant's idea of the possible range of basic variants of the modular system and are intended to help to understand the system and its possibilities and not to limit the scope of the invention only to the described possibilities of use, since it is easy for a person skilled in the art to combine other options for assembling the individual modules of the modular system according to the invention to meet the requirements placed on it.

Fig. 10 shows direct connection of two open modules, which are connected to each other by their inclined peripheral surfaces **4,** their bases **1** being arranged on opposite sides of the formed unit, i.e., one at the bottom and the other at the top. This arrangement can be realized from any of the types of modules described above, and if formed from semi-open modules with a back surface, or if one of the openings in an open module is closed with a plug, it can be used as a flower pot when turned to the closed opening.

Fig. 11 shows curved connection of two open modules, which are connected to each other by their inclined peripheral surfaces **4,** their bases **1** being arranged on the same sides of the formed unit. This arrangement can be easily realized from any kind of open or semi-open modules. It would be more difficult to realize from solid modules. Again, a flower pot appears to be the preferred use.

Figs. 12a to 12c show the use of a module from the modular system according to the invention to form a chair.

In the embodiment according to Fig. 12a a 12b, the module is placed with its base **1** at the bottom, the side peripheral surface **2** forms the front side of the chair base, the back side of which being formed by the inclined peripheral surface **4.** The upper side of the chair base is formed by the upper peripheral surface **3,** on which the seat **31** and the backrest **32** of the chair are arranged, the seat **31** having the same dimensions as the upper peripheral surface **3** of the module.

In the embodiment according to Fig. 12c, the module is turned downwards with its upper peripheral surface **3** and the upper side of the chair base is formed by a base **1.** The back side of the chair base is formed by an inclined peripheral surface **4** and the front side of the chair base is formed by a side peripheral surface **2.** The front edge of the seat **31** is aligned with the front edge of the side peripheral surface **2** of the module. Behind the backrest **32** there is free space on the base **1,** or the seat **31** can be longer and cover the entire surface of the base **1** of the module.

Figs. 13a to 13d show various embodiments of the benches.

In the embodiment according to Fig. 13a, the base of the bench is formed by two open modules, the bases **1** of which are arranged at the bottom and the upper side of the base is formed by the upper peripheral surfaces **3,** on which the seat **31** and the backrest **32** are arranged. The modules are connected to each other by their side peripheral surfaces **2.**

In the embodiment according to Fig. 13b, the base of the bench is formed by two open modules arranged in the same manner as in Fig. 10. The seat **31** is arranged on top of the base.

In the embodiment according to Fig. 13c, the bench consists of a seat **31** and two separate modules placed on the edges of the seat **31,** the seat being placed on the bases **1** of the modules, whose upper peripheral surface **3** is oriented downwards. There is free space between the two modules under the seat **31.**

In the embodiment according to Fig. 13d, the seat is placed on four interconnected modules, of which the outer modules and the middle modules adjacent to them are interconnected by their inclined peripheral surfaces **4** and thus form pairs similar to the embodiment of Fig. 10, while these pairs of modules are connected in the middle of the bench by the side peripheral surfaces **2** of the middle modules.

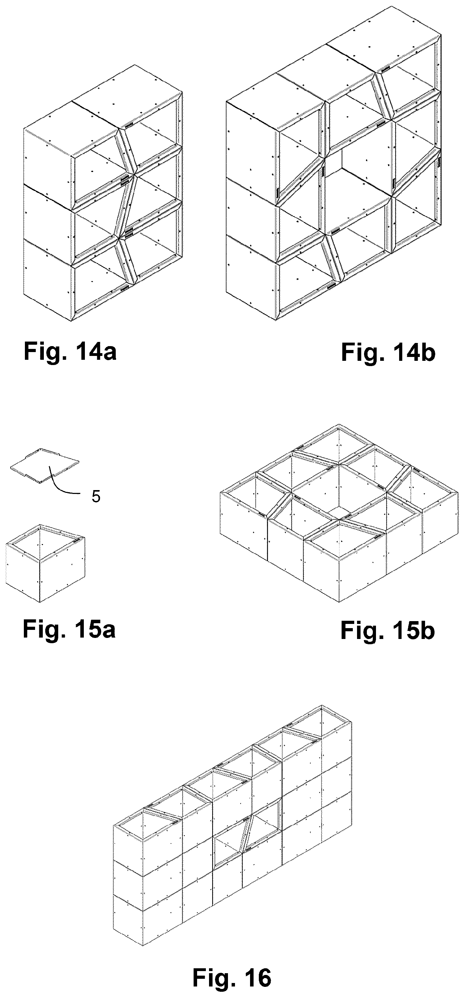

Fig. 14a shows an exemplary embodiment of a storage system consisting of six modules arranged in pairs which are arranged one above the other, wherein the modules in each pair are connected to each other by their inclined peripheral surfaces **4** and the pairs are connected to each other by the bases **1** of the two modules arranged one above the other and by the upper peripheral surfaces **3** of the modules arranged one above the other.

Fig. 14b shows another exemplary embodiment of a storage system, the bottom and top of which are formed by a trio of modules, the outermost modules of the bottom and top being connected by inserted modules to form an opening in the central part of the storage system. The storage systems may consist of open or semi-open modules, wherein the amount and relative arrangement of the individual modules may be chosen according to the needs of the user.

Figs. 15a, 15b show an arrangement of the module for use as a flower pot or raised bed.

Fig. 15a shows a separate module with a separate back surface that is attached to the module opening and forms the bottom of the flower pot.

Fig. 15b shows a set of modules which is constructed in the same way as the storage system of Fig. 14b. The only difference is that it is arranged on the ground, and once filled with a growing medium, plants can be grown in it. If the user needs to create a higher raised bed, two such formations can be stacked one upon the other.

Fig. 16 shows an exemplary embodiment of a wall which consists of a system of three rows of modules arranged one above the other, with six modules in each row. In the lower and upper rows, the modules are arranged with their openings in a vertical direction, as are the outermost pairs of modules in the middle row. The middle modules in the middle row are rotated by 90°, so that their openings are directed horizontally and form a storage space in the wall. The exemplary embodiment shows further options of combinations of individual modules. The individual modules are connected using the pre-prepared openings **11,** which were described above.

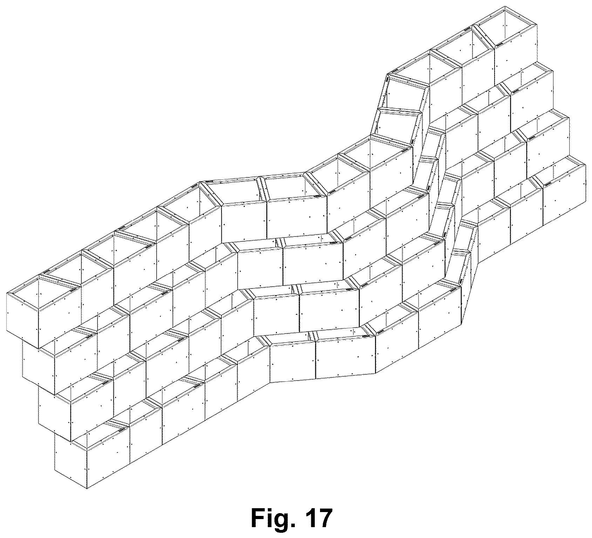

Fig. 17 depicts an exemplary embodiment of a retaining wall assembled from four rows of modules. The modules in the individual rows are connected to each other by means of pre-prepared openings **11.** Since the rows are offset backwards, the rows are assembled at the assembly site.

The 398 mm dimension used for the length and width of the side peripheral surface **2,** the length and width of the upper peripheral surface **3** and the width of the remaining peripheral surfaces **1** and **4** gives the modules of the application the possibility of being used in any position when assembled into a product, and can therefore lie on the substrate with the base **1,** the side peripheral surface **2,** the top peripheral surface **3,** the back auxiliary peripheral surface **5** or its corresponding cavity, and the front peripheral surface **6** or its corresponding cavity.

The shape of the module allows any shape to be linked and connected to other modules on all six sides. Perpendicular assemblies can be formed by connecting the perpendicular peripheral surfaces of the modules. By connecting the inclined peripheral surface of one module to the inclined peripheral surface of another module, both perpendicular assemblies and inclined assemblies can be formed, forming the shape of a part of a circle, or even the shape of a closed circle. The fact that two adjacent peripheral surfaces are square allows for variability of arrangement in the resulting product.

The fundamental difference in comparison to the background art is that the three-dimensional modules of the modular system according to the invention have the same dimensions and are detachably connected to each other.

**Industrial applicability**

The modular system according to the invention can be used for the creation of a wide range of landscaping elements, outdoor seating furniture, urban furniture, and the like. Known modular systems and the building blocks described therein according to the documents mentioned in the background art are intended to construct walls or retaining walls, which may represent landscape elements, but in no case do these blocks have the properties that the three-dimensional modules according to the present application have. Building blocks according to the known background art have three mutually perpendicular surfaces connected by an inclined peripheral wall and can be manufactured in various shapes and sizes, but none of the known documents describes a building block/module whose side peripheral surface and the adjacent upper peripheral surface are square and all peripheral surfaces have the same width. None of these blocks can be used alone in the landscape or garden - they would probably only represent a discarded stone or other waste, whereas a separately used module, according to the application, could be a flower pot, for example. From a combination of several blocks according to the background art, it is not possible to create seating furniture, street furniture, flower pots, raised beds, storage systems, etc., by simply assembling the blocks, because to form such elements, several walls would need to be formed.

**List of references**

1     base
2     side peripheral surface
3     upper peripheral surface
4     inclined peripheral surface
5     back auxiliary surface
6     front auxiliary surface
11    openings
$\alpha$     acute angle

**Claims**

1. A modular system, in particular for creating outdoor seating furniture, urban furniture, flower pots, raised beds, outdoor storage systems, retaining walls, fences, garden and park landscaping elements, comprising at least one three-dimensional module consisting of three mutually perpendicular peripheral surfaces which are formed by a base (1), a side peripheral surface (2) and an upper peripheral surface (3), wherein the upper peripheral surface (3) and the base (1) are connected to each other by an inclined peripheral surface (4), which forms an acute angle ($\alpha$) with the base, **characterized in that** the three-dimensional modules of the modular system have the same dimensions and are detachably connected to each other, wherein the side peripheral surface (2) and the adjacent upper peripheral surface (3) of the three-dimensional module are square, wherein the width of all peripheral surfaces (2, 3, 4) and the base (1) is the same and the angle ($\alpha$) formed between the inclined peripheral surface (4) and the base (1) ranges from 45 to 82°.

2. The modular system according to claim 1, **characterized in that** the acute angle ($\alpha$) formed between the inclined peripheral surface (4) and the base (1), is in the range of 67 to 77°.

3. The modular system according to claim 1 or¨2, **characterized in that** the acute angle ($\alpha$) is 72°.

4. The modular system according to any of claims 1 to 3, **characterized in that** the length of the side of the square forming the side peripheral surface (2) and the upper peripheral surface (3) is 398 mm.

5. The modular system according to any of claims 1 to 4, **characterized in that** the modules consist of only four peripheral surfaces (1, 2, 3, 4) with an opening between them, one of the peripheral surfaces being the base (1).

6. The modular system according to claim 5, **characterized in that** the peripheral surfaces (1, 2, 3, 4) of the individual modules are **made of boards.**

7. The modular system according to claim 5 or 6, **characterized in that** the peripheral surfaces (1, 2, 3, 4) are made of steel.

8. The modular system according to any of claims 1 to 5, **characterized in that** the peripheral surfaces (1, 2, 3, 4) of the individual modules are made of sheet steel and are provided with inward bends on both sides.

9. The modular system according to any of claims 1 to 6, **characterized in that** the peripheral surfaces (1, 2, 3, 4) of the individual modules are made of concrete.

10. The modular system according to any of the preceding claims 1 to 9, **characterized in that** at least one opening between the peripheral surfaces (1, 2, 3, 4) is filled with an auxiliary surface (5, 6).

11. The modular system according to any of the preceding claims 1 to 10, **characterized in that** the peripheral surfaces (1, 2, 3, 4) are provided with openings (11) for interconnecting the modules.

12. The modular system according to any of claims 1 to 4, **characterized in that** the modules are made of a solid body.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12a**

**Fig. 12b**

**Fig. 12c**

**Fig. 13a**

**Fig. 13b**

**Fig. 13c**

**Fig. 13d**

**Fig. 14a**

**Fig. 14b**

5

**Fig. 15a**

**Fig. 15b**

**Fig. 16**

**Fig. 17**

Europäisches
Patentamt

European
Patent Office

Office européen
des brevets

## EUROPEAN SEARCH REPORT

**Application Number**

EP 25 18 9496

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NO 124 351 B (GOTTFRED TOTAS [NO]) 10 April 1972 (1972-04-10) | 1-4,9,12 | INV. A47B47/00 |
| A | * paragraph [0010] * <br> * figure 2 * | 5-8,10, 11 | A47B87/00 <br> A47B87/02 <br> A47C1/124 |
| X | EP 0 499 118 A1 (BAYER MANJO [DE]) 19 August 1992 (1992-08-19) | 1-11 | A47C4/02 |
| A | * figures 3, 10-11, 13-14 * | 12 | ADD. <br> A47C11/00 |
| X | CN 220 369 746 U (CHINA RAILWAY ERYUAN ENG GROUP) 23 January 2024 (2024-01-23) | 1-9,12 | A47C13/00 |
| A | * figure 20 * | 10,11 | |

**TECHNICAL FIELDS SEARCHED (IPC)**

A47B
A47C
A63H
A47D

The present search report has been drawn up for all claims

| Place of search | Date of completion of the search | Examiner |
|---|---|---|
| The Hague | 2 December 2025 | Bitton, Alexandre |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 4 681 578 A1

## ANNEX TO THE EUROPEAN SEARCH REPORT
## ON EUROPEAN PATENT APPLICATION NO.

EP 25 18 9496

02-12-2025

| Patent document cited in search report | | Publication date | Patent family member(s) | | Publication date |
|---|---|---|---|---|---|
| NO 124351 | B | 10-04-1972 | NONE | | |
| EP 0499118 | A1 | 19-08-1992 | AT | E142855 T1 | 15-10-1996 |
| | | | DE | 9101556 U1 | 02-05-1991 |
| | | | EP | 0499118 A1 | 19-08-1992 |
| | | | ES | 2094243 T3 | 16-01-1997 |
| CN 220369746 | U | 23-01-2024 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0047825 A
- US 5848511 A
- US 2006117697 A1
- WO 03006749 A2
- US 2002028114 A1
- WO 2015066437 A
- US 2012233952 A1